# EUROPÄISCHE PATENTSCHRIFT

(11) **EP 2 937 595 B1**
(45) Veröffentlichungstag und Bekanntmachung des Hinweises auf die Patenterteilung: **02.05.2018**
(21) Anmeldenummer: 15161830.3
(22) Anmeldetag: 31.03.2015
(51) Int. Cl.: F16F 9/32, F16F 9/02

(54) **GASDRUCKFEDER**
GAS COMPRESSION SPRING
VÉRIN À GAZ

(30) Priorität: 31.03.2014 DE 102014104482
(43) Veröffentlichungstag der Anmeldung: 28.10.2015
(73) Patentinhaber: Steinel Normalien AG, 78056 Villingen-Schwenningen (DE)
(72) Erfinder: Elfers, Heinz, 78056 Villingen-Schwenningen (DE); Feisthammel, Horst, 88662 Überlingen (DE)
(74) Vertreter: Westphal, Mussgnug & Partner Patentanwälte mbB

(56) Entgegenhaltungen:
- DE-A1-102005 048 745
- DE-A1-102007 034 416
- US-A1- 2011 084 503

## Beschreibung

Die Erfindung betrifft eine Gasdruckfeder gemäß dem Oberbegriff des Patentanspruchs 1.

Gasdruckfedern weisen üblicherweise ein zylindrisches Gehäuse mit einer Wandung, einem Bodenteil und einem eine Öffnung aufweisenden Deckelteil sowie einer Längsachse auf, wobei in dem Gehäuse entlang der Längsachse ein Kolben mit einer Außenfläche, einer Stirnseite und einer durch die Öffnung geführten Kolbenstange verschiebbar angeordnet ist. Zwischen der Stirnseite des Kolbens und dem Bodenteil des Gehäuses ist eine Gaskompressionskammer gebildet. Derartige Gasdruckfedern werden insbesondere in Werkzeugen oder Maschinen eingesetzt, um Hubbewegungen durchzuführen.

Ein häufig verwendetes Gas zur Befüllung der Gasdruckfedern ist Stickstoff. Gasdruckfedern sind mit Stickstoff oft bei Drucken zwischen 120 und 220 bar gefüllt. Zur Sicherheitsüberwachung ist es beispielsweise aus der DE 10 2007 034 416 A1 bekannt, Gasdruckfedern mit einem Sensor zur Überwachung von physikalischen Messgrößen innerhalb und/oder an der Gasdruckfeder auszustatten. Zur Stromversorgung des Sensors kann entweder ein Kabel vorgesehen werden, was jedoch ein Verkabelungsaufwand erfordert. Alternativ kann bei den Gasdruckfedern gemäß der DE 10 2007 034 416 A1 die Stromversorgung auch netzunabhängig durch Batterien, Akkumulatoren oder induktiv bewerkstelligt werden.

Batterien und Akkumulatoren haben jedoch nur eine begrenzte Lebensdauer, welche oft kürzer als die Lebensdauer der Gasdruckfeder ist. Eine induktive Stromversorgung ist bei in Werkzeugen oder Maschinen eingebauten Gasdruckfedern schwierig zu realisieren.

Aus DE 10 2005 046 745 A1 sind auch Druckmittelzylinder mit einem Druckaufnehmer bekannt, wobei der Druckaufnehmer einen Piezokristall als Drucksensor aufweist, der zusätzlich als Energieversorgung für eine Auswerteeinheit agieren kann.

Die Aufgabe der Erfindung besteht daher darin, eine Gasdruckfeder bereitzustellen, bei welcher die Stromversorgung des Sensors zur Detektion einer physikalischen Größe weitergebildet wird, insbesondere derart, dass eine netzunabhängige Stromversorgung bereitgestellt wird, ohne die Lebensdauer der Gasdruckfeder zu beeinträchtigen.

Die Aufgabe wird erfindungsgemäß gelöst durch eine Gasdruckfeder mit den Merkmalen des Patentanspruchs 1.

Vorteilhafte Ausgestaltungen und Weiterbildungen der Erfindung sind in den abhängigen Ansprüchen angegeben.

Die erfindungsgemäße Gasdruckfeder mit einem zylindrischen Gehäuse, welches eine Wandung, ein Bodenteil und ein eine Öffnung aufweisendes Deckelteil sowie eine Längsachse aufweist, und mit einem in dem Gehäuse entlang der Längsachse verschiebbaren Kolben mit einer Außenfläche und einer Stirnseite, wobei zwischen dem Kolben und dem Gehäuse eine Gaskompressionskammer gebildet ist und wobei die Gasdruckfeder wenigstens einen Sensor zur Detektion einer physikalischen Größe aufweist, zeichnet sich dadurch aus, dass die Gasdruckfeder Mittel aufweist, welche zur Erzeugung zumindest eines Teils der zur Stromversorgung des wenigstens einen Sensors nötigen elektrischen Energie ausgebildet sind. Dadurch, dass innerhalb der Gasdruckfeder selbst Energie erzeugt wird, ist die Gasdruckfeder weniger, vorteilhafterweise gar nicht, auf die Zufuhr von Energie von außerhalb oder auf die Zufuhr von Energie mittels Batterien oder Akkumulatoren angewiesen. Externe Verkabelungen können vollständig entfallen. Weiterhin wird die Lebensdauer der Gasdruckfeder nicht mehr durch die Lebensdauer der Batterie oder des Akkumulators begrenzt.

In einer Ausführungsform ist die Gaskompressionskammer zwischen der Stirnseite des Kolbens und dem Bodenteil des Gehäuses gebildet, wobei die Außenfläche des Kolbens gegen die Wandung des Gehäuses abgedichtet ist, so dass eine sogenannte Ein-Kammer-Gaskompressionskammer gebildet wird. In einer alternativen Ausführungsform weist die Gaskompressionskammer zwei Kammern auf, wobei eine erste Kammer zwischen dem Kolben und dem Deckelteil und eine zweite Kammer zwischen der Stirnseite des Kolbens und dem Bodenteil des Gehäuses gebildet ist, so dass eine sogenannte Zwei-Kammer-Gaskompressionskammer gebildet wird. Bei einer Zwei-Kammer-Gaskompressionskammer ist ein Gasfluss von dem Bereich zwischen dem Kolben und dem Deckelteil zu dem Bereich zwischen dem Kolben und dem Bodenteil zwischen der Außenfläche des Kolbens und der Wandung des Gehäuses möglich, während eine Abdichtung der Gaskompressionskammer zwischen der Kolbenstange und dem Gehäuse in der Öffnung des Deckelteils erfolgt.

Eine vorteilhafte Ausgestaltung der Erfindung sieht vor, dass die Mittel zur Erzeugung elektrischer Energie aus der Relativbewegung zwischen dem Kolben und dem Gehäuse ausgebildet sind. Da in der Gasdruckfeder zwei regelmäßig, oft mit großer Geschwindigkeit, gegeneinander bewegte Komponenten vorhanden sind, nämlich das Gehäuse und der Kolben, kann auf einfache Art und Weise die kinetische Energie durch die Mittel in elektrische Energie umgesetzt werden.

Vorteilhafterweise weisen die Mittel eine Spule und einen Magneten auf, da bei Relativbewegung zwischen einer Spule und einem Magneten in der Spule eine Spannung induziert werden kann, welche in einfacher Art und Weise zur Stromversorgung des Sensors verwendet werden kann.

Eine bevorzugte Ausführungsform der Erfindung sieht vor, dass der Magnet an dem Kolben und die Spule an dem Gehäuse, vorzugsweise innerhalb der Gaskompressionskammer, angeordnet sind, da durch eine relativ zum Gehäuse feststehende Spule der Anschluss der Spule an den Sensor oder eine Elektronik vereinfacht werden kann.

Besonders bevorzugt weist die Spule Anschlusskontakte auf, welche druckdicht aus der Gaskompressionskammer herausgeführt sind, vorzugsweise in das Bodenteil. Das druckdichte Herausführen der Anschlusskontakte der Spule gewährleistet die Dichtigkeit der Gaskompressionskammer. Das Herausführen der Anschlusskontakte in das Bodenteil ist dann von Vorteil, wenn der Sensor und ggfs. eine zugehörige Elektronik in dem Bodenteil angeordnet sind, so dass lediglich kurze Wege innerhalb der Gasdruckfeder zurückzulegen sind.

Eine weitere vorteilhafte Ausführungsform der Erfindung sieht vor, dass die Mittel ausgebildet sind, elektrische Energie aus der Druckänderung in der Gasdruckfeder, insbesondere in der Gaskompressionskammer, zu erzeugen. Da in einer Gasdruckfeder durch die regelmäßige Relativbewegung zwischen dem Kolben und dem Gehäuse regelmäßig starke Druckänderungen auftreten, kann auch auf diese Weise regelmäßig bei jedem Hub der Gasdruckfeder Energie erzeugt werden.

Vorteilhafterweise weisen die Mitteil ein Piezoelement auf, welches insbesondere auf der Außenseite des Bodenteils oder in der Gaskompressionskammer angeordnet ist. Die Anordnung des Piezoelements auf der Außenseite des Bodenteils weist den Vorteil auf, dass ein Herausführen von Anschlusskontakten des Piezoelements aus der Gaskompressionskammer entfallen kann. Andererseits wird jedoch der Druck nicht so unmittelbar wie bei Anordnung des Piezoelements innerhalb der Gaskompressionskammer ermittelt.

Vorteilhafterweise weist das Piezoelement, welches in der Gaskompressionskammer angeordnet ist, Anschlusskontakte auf, welche druckdicht aus der Gaskompressionskammer herausgeführt sind, vorzugsweise in das Bodenteil. Durch die druckdichte Herausführung wird einerseits die Dichtigkeit der Gaskompressionskammer nicht beeinträchtigt. Bei Herausführen der Anschlusskontakte in das Bodenteil, in welchem beispielsweise der Sensor und ggfs. eine Elektronik angeordnet ist, sind lediglich kurze Wege innerhalb der Gasdruckfeder zu überbrücken.

Ein weiteres vorteilhaftes Ausführungsbeispiel der Erfindung sieht vor, dass die Mittel ausgebildet sind, elektrische Energie aus der in Gasdruckfeder abgestrahlten Wärmeenergie zu erzeugen. Da sich durch die Kompression des Gasvolumens in der Gasdruckfeder das Gas um 10 bis 20 K erwärmen kann, kann auf diese Art und Weise auch die entstandene Wärme zur Erzeugung von elektrischer Energie genutzt werden.

Vorteilhafterweise weisen die Mittel ein Peltier-Element mit einer ersten Seite und einer zweiten Seite auf, welches vorzugsweise in dem Gehäuse, insbesondere dem Bodenteil, derart angeordnet ist, dass die erste Seite in wärmeleitendem Kontakt mit dem Gehäuse und die zweite Seite in wärmeleitendem Kontakt mit der Umgebung der Gasdruckfeder ist. Die erste Seite nimmt somit die Wärme aus dem durch den Temperaturanstieg des Gases aufgewärmten Gehäuse auf, während die zweite Seite die Wärme an die Umgebung, beispielsweise an ein Werkzeug oder eine Maschine, in welchem die Gasdruckfeder angeordnet ist, abführen kann.

Die Erfindung wird anhand der nachfolgenden Figuren ausführlich erläutert.

Es zeigen:
- Fig. 1: einen Längsschnitt durch ein erstes Ausführungsbeispiel einer erfindungsgemäßen Gasdruckfeder,
- Fig. 2: einen Längsschnitt durch ein zweites Ausführungsbeispiel einer erfindungsgemäßen Gasdruckfeder und
- Fig. 3: einen Längsschnitt durch ein drittes Ausführungsbeispiel einer erfindungsgemäßen Gasdruckfeder.

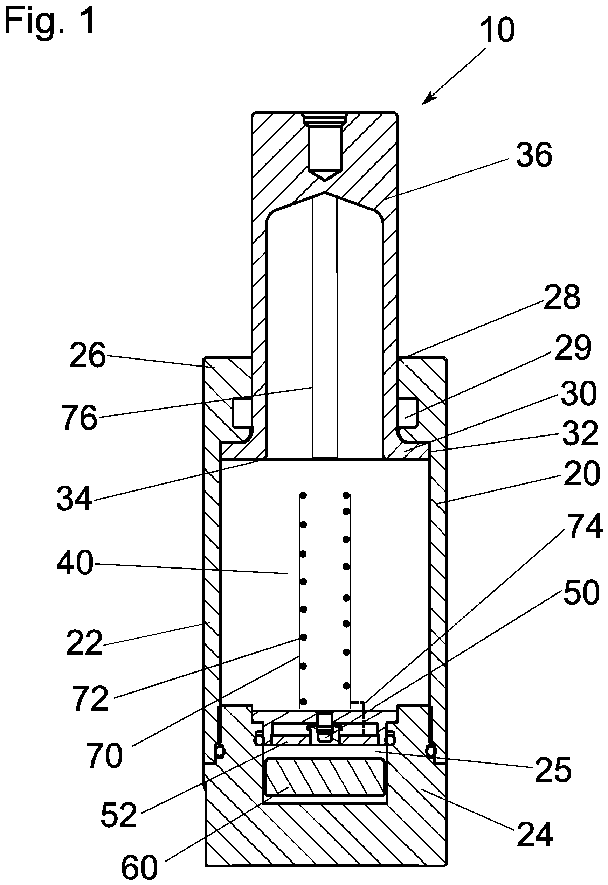

Fig. 1 zeigt einen Längsschnitt durch ein Ausführungsbeispiel einer Gasdruckfeder 10, welcher ein Gehäuse 20 und einen in dem Gehäuse 20 verschiebbar angeordneten Kolben 30 aufweist. Das Gehäuse 20 ist zylindrisch, insbesondere kreiszylindrisch, ausgebildet und weist eine Wandung 22, ein Bodenteil 24 und ein Deckelteil 26 auf. Das Deckelteil 26 ist insbesondere einstückig mit der Wandung 22 verbunden, während das Bodenteil 24 vorteilhafterweise lösbar an der Wandung 22 angeordnet ist und beispielsweise mittels einer Schraubverbindung mit der Wandung 22 verbindbar ist.

Der Kolben 30 ist zylindrisch ausgebildet mit einer Außenfläche 32 sowie einer Stirnseite 34 und einer Kolbenstange 36. Das Deckelteil 26 des Gehäuses 20 weist eine Öffnung 28 auf, durch welche die Kolbenstange 36 aus dem Gehäuse 20 nach außen geführt ist.

Das Gehäuse 20 weist eine Längsachse 1 auf, entlang welcher der Kolben 30 in dem Gehäuse 20 verschiebbar angeordnet ist.

Zwischen dem Kolben 30 und dem Gehäuse 20 ist eine Gaskompressionskammer 40 gebildet. Die Gaskompressionskammer ist in der Öffnung 28, durch welche die Kolbenstange 36 aus dem Gehäuse 20 nach außen geführt ist, durch eine Dichtung 29 abgedichtet. An der Außenfläche des Kolbens 30 kann Gas von einem ersten Teil der Gaskompressionskammer 40, welcher zwischen der Stirnseite 34 des Kolbens 30 und dem Bodenteil 24 des Gehäuses 20 angeordnet ist, in einen zweiten Teil der Gaskompressionskammer 40, welcher zwischen dem Kolben 30 und dem Deckelteil 26 gebildet ist, strömen. Auf diese Weise wird eine sogenannte Zwei-Kammer-Gaskompressionskammer 40 gebildet.

In einer alternativen, nicht dargestellten Ausführungsform kann es sich bei der Gasdruckfeder 10 auch um eine gasdruckfeder mit einer Ein-Kammer-Gaskompressionskammer 40 handelt. Bei einer Ein-Kammer-Gaskompressionskammer 40 ist der Kolben 30 an seiner Außenfläche 32 über eine Dichtung gegenüber der Wandung 22 des Gehäuses 20 abgedichtet, so dass ein Gasfluss von dem Bereich zwischen der Stirnseite 34 des Kolbens 30 und dem Bodenteil 24 des Gehäuses 20 in den Bereich zwischen dem Kolben 30 und dem Deckelteil 26 unterbunden wird. Eine Dichtung in der Öffnung 28, durch welche die Kolbenstange 36 aus dem Gehäuse 20 geführt wird, kann dann entfallen.

In der Gasdruckfeder 10, insbesondere der Gaskompressionskammer 40, ist ein Gas, beispielsweise Stickstoff, angeordnet, welches bei Einführen des Kolbens 30 in das Gehäuse 20 verdichtet wird, so dass sich ein Druck aufbaut. Dieser erzeugt eine Rückstellkraft auf den Kolben 30. Derartige Gasdruckfedern 10 werden insbesondere in Werkzeugen oder Maschinen eingesetzt.

Die Gasdruckfeder 10 weist einen Sensor 50 zur Detektion einer physikalischen Größe auf. Beispielsweise kann der Sensor 50 als Drucksensor, Temperatursensor, Kraftsensor oder Wegsensor ausgebildet sein. In einer bevorzugten Ausführungsform kann der Sensor 50 als kombinierter Druck- und Temperatursensor ausgebildet sein. Der Sensor 50 ist beispielsweise in das Bodenteil 24 derart integriert, dass er physikalische Größen, beispielsweise Druck und/oder Temperatur, in der Gaskompressionskammer 40 detektieren kann. Die von dem Sensor 50 detektierten Größen können von einer in einem Hohlraum 25 des Bodenteils 24 angeordneten Elektronik 52 weiterverarbeitet, beispielsweise gespeichert und ausgewertet werden.

Der Sensor 50 und eine ggfs. vorhandene Elektronik 52 benötigen zum Betrieb elektrische Energie. Die Gasdruckfeder 10 weist Mittel 70 auf, welche zur Erzeugung zumindest eines Teils der zur Energieversorgung des Sensors 50 nötigen Energie ausgebildet sind. Die Mittel 70 weisen eine Spule 72 und einen Magneten 76 auf. Der Magnet 76 ist an dem Kolben 30 angeordnet, während die Spule 72 an dem Gehäuse 20, insbesondere in der Gaskompressionskammer 40, angeordnet ist. Die Spule 72 ist dabei derart angeordnet, dass ihre Längsachse parallel zur Längsachse L der Gasdruckfeder 10 verläuft. Der Magnet 76 ist derart an dem Kolben 30 angeordnet, dass bei einer Relativbewegung zwischen dem Kolben 30 und dem Gehäuse 20 der Magnet 76 in die Spule 72 eintauchen kann. Die Spule 72 weist Anschlusskontakte 74 auf, welche druckdicht aus der Gaskompressionskammer 40 herausgeführt und insbesondere in den Hohlraum 25 des Bodenteils 24 hineingeführt sind. Insbesondere verbinden die Anschlusskontakte 74 die Spule 72 mit entweder dem Sensor 50 oder der Elektronik 52. Durch die Relativbewegung des Magneten 76 und der Spule 72 wird in der Spule 72 eine Spannung induziert, welche zur Erzeugung von elektrischer Energie dienen kann, die zur Stromversorgung des Sensors 50 und einer ggfs. vorhandenen Elektronik 52 dienen kann. Vorteilhafterweise wird die Stromversorgung des Sensors 50 und der Elektronik 52 vollständig durch die durch die Mittel 70 erzeugte Energie realisiert. Falls die durch die Mittel 70 erzeugte Energie nicht ausreichend sein sollte, kann die Gasdruckfeder 10 zusätzlich eine Batterie 60 aufweisen.

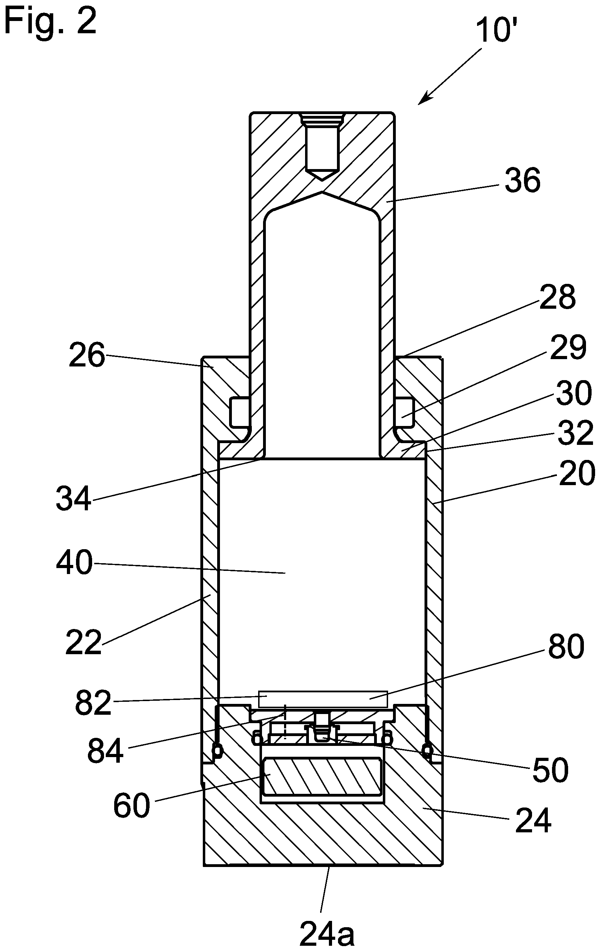

Fig. 2 zeigt einen Längsschnitt durch ein weiteres Ausführungsbeispiel einer Gasdruckfeder 10', welche sich von der in Fig. 1 dargestellten Gasdruckfeder 10 lediglich in der Ausgestaltung der Mittel zur Erzeugung zumindest eines Teils der zur Energieversorgung des Sensors 50 nötigen Energie unterscheidet. Die Gasdruckfeder 10' weist Mittel 80 auf, welche ausgebildet sind, aus der Druckänderung in der Gasdruckfeder 10', insbesondere aus der Druckänderung in der Gaskompressionskammer 40, elektrische Energie zu erzeugen. Dazu weisen die Mittel 80 ein Piezoelement 82 auf, welches in dem in Fig. 2 dargestellten Ausführungsbeispiel in der Gaskompressionskammer 40, insbesondere an dem Bodenteil 24, angeordnet ist. Anschlusskontakte 84 des Piezoelements 82 sind druckdicht aus der Gaskompressionskammer 40 herausgeführt, insbesondere in den Hohlraum 25 des Bodenteils 24, wo sie das Piezoelement 82 mit dem Sensor 50 oder einer ggfs. vorhandenen Elektronik 52 verbinden. Bei einer Druckänderung wird in einem Piezoelement elektrische Energie erzeugt, die zur Stromversorgung des Sensors 50 oder der Elektronik 52 dienen kann.

In einer alternativen, nicht dargestellten Ausführungsform der Erfindung kann das Piezoelement 82 auch an einer äußeren Bodenseite 24a des Bodenteils 24 angeordnet werden. Der elektrische Kontakt zwischen diesem Piezoelement 82 und dem Hohlraum 25 des Bodenteils 24 könnte durch eine nicht notwendigerweise druckdicht ausgebildete Öffnung, welche von der äußeren bodenseite 24a zu dem Hohlraum 25 führt, erfolgen. Ein derart angeordnetes Piezoelement 82 wäre direkt zugänglich und einfach austauschbar und könnte zudem auch als Kraftsensor fungieren, würde den in der Gaskompressionskammer 40 herrschenden Druck jedoch weniger unmittelbar detektieren.

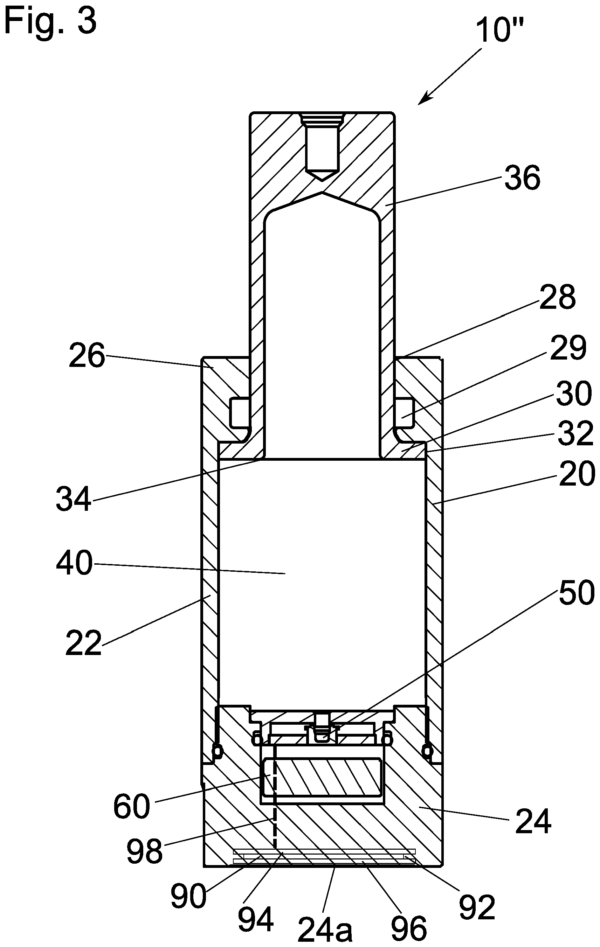

Fig. 3 zeigt ein weiteres Ausführungsbeispiel einer erfindungsgemäßen Gasdruckfeder 10", welche sich von der in Fig. 1 dargestellten Gasdruckfeder 10 lediglich durch die Ausgestaltung der Mittel zur Erzeugung zumindest eines Teils der zur Energieversorgung des Sensors 50 nötigen Energie unterscheidet. Die Gasdruckfeder 10" weist Mittel 90 auf, welche zur Erzeugung elektrischer Energie aus der in der Gasdruckfeder abgestrahlten Wärmeenergie ausgebildet sind. Die Mittel 90 weisen insbesondere ein Peltier-Element 92 mit einer ersten Seite 94 und einer zweiten Seite 96 auf. Die beiden Seiten 94, 96 eines Peltier-Elements 92 stellen insbesondere die warme und die kalte Seite des Peltierelements 92 dar.

Das Peltierelement 92 ist insbesondere derart in dem Gehäuse 20 angeordnet, dass die erste Seite 94 in wärmeleitendem Kontakt mit dem Gehäuse 20 und die zweite Seite 96 in wärmeleitendem Kontakt mit der Umgebung der Gasdruckfeder 10" ist. Die zweite Seite 96 des Peltierelements 92 bildet somit insbesondere einen Teil der Außenfläche der Gasdruckfeder 10". Insbesondere ist das Peltierelement 92 in dem Bodenteil 24 angeordnet, beispielsweise derart, dass die zweite Seite 96 in der äußeren Bodenseite 24a des Bodenteils 24 liegt. Das Peltierelement 92 ist über Anschlusskontakte 98 mit dem Sensor 50 der der Elektronik 52 verbunden. Die erste Seite 94 des Peltierelements 52 nimmt die in dem Gehäuse 20 erzeugte Wärme auf, während die Wärme über die zweite Seite 96 an die Umgebung der Gasdruckfeder 10" beispielsweise an das Werkzeug oder eine Maschine abgeführt wird, wobei in dem Peltierelement 92 eine Spannung erzeugt wird, die zur Stromversorgung des Sensors 50 und ggfs. der Elektronik 52 dienen kann.

### Bezugszeichenliste

- 10: Gasdruckfeder
- 10': Gasdruckfeder
- 10": Gasdruckfeder
- 20: Gehäuse
- 22: Wandung
- 24: Bodenteil
- 24a: Bodenseite
- 25: Hohlraum
- 26: Deckelteil
- 28: Öffnung
- 29: Dichtung
- 30: Kolben
- 32: Außenfläche
- 34: Stirnseite
- 36: Kolbenstange
- 40: Gaskompressionskammer
- 50: Sensor
- 52: Elektronik
- 60: Batterie
- 70: Mittel
- 72: Spule
- 74: Anschlusskontakt
- 76: Magnet
- 80: Mittel
- 82: Piezoelement
- 84: Anschlusskontakt
- 90: Mittel
- 92: Peltierelement
- 94: erste Seite
- 96: zweite Seite
- 98: Anschlusskontakt
- 1: Längsachse

## Patentansprüche

1. Gasdruckfeder (10, 10', 10") mit einem zylindrischen Gehäuse (20), welches eine Wandung (22), ein Bodenteil (24) und ein eine Öffnung (28) aufweisendes Deckelteil (26) sowie eine Längsachse (1) aufweist, und mit einem in dem Gehäuse (20) entlang der Längsachse (1) verschiebbaren Kolben (30) mit einer Außenfläche (32) und einer Stirnseite (34), wobei zwischen dem Kolben (30) und dem Gehäuse (20) eine Gaskompressionskammer (40) gebildet ist und wobei die Gasdruckfeder (10, 10', 10") wenigstens einen Sensor (50) zur Detektion wenigstens einer physikalischen Größe aufweist,
**dadurch gekennzeichnet, dass** die Gasdruckfeder (10, 10', 10") Mittel (70, 80, 90) zur Erzeugung zumindest eines Teils der zur Stromversorgung des wenigstens einen Sensors (50) nötigen elektrischen Energie aufweist.

2. Gasdruckfeder nach Anspruch 1,
**dadurch gekennzeichnet, dass** die Mittel (70) zur Erzeugung elektrischer Energie aus der Relativbewegung zwischen dem Kolben (30) und dem Gehäuse (20) ausgebildet sind.

3. Gasdruckfeder nach Anspruch 2,
**dadurch gekennzeichnet, dass** die Mittel (70) eine Spule (72) und einen Magneten (76) aufweisen.

4. Gasdruckfeder nach Anspruch 3,
**dadurch gekennzeichnet, dass** der Magnet (76) an dem Kolben (30) und die Spule (72) an dem Gehäuse (20), vorzugsweise innerhalb der Gaskompressionskammer (40), angeordnet sind.

5. Gasdruckfeder nach Anspruch 4,
**dadurch gekennzeichnet, dass** die Spule (72) Anschlusskontakte (74) aufweist, welche druckdicht aus der Gaskompressionskammer (40) herausgeführt sind, vorzugsweise in das Bodenteil (24).

6. Gasdruckfeder nach einem der vorhergehenden Ansprüche,
**dadurch gekennzeichnet, dass** die Mittel (80) zur Erzeugung elektrischer Energie aus der Druckänderung in der Gasdruckfeder (10'), insbesondere in der Gaskompressionskammer (40), ausgebildet sind.

7. Gasdruckfeder nach Anspruch 6,
**dadurch gekennzeichnet, dass** die Mittel (80) ein Piezoelement (82) aufweisen, welches vorzugsweise auf der Außenseite des Bodenteils (24) oder in der Gaskompressionskammer (40) angeordnet ist.

8. Gasdruckfeder nach Anspruch 7,
**dadurch gekennzeichnet, dass** das Piezoelement (82) in der Gaskompressionskammer (40) angeordnet ist und Anschlusskontakte (84) aufweist, welche druckdicht aus der Gaskompressionskammer (40) herausgeführt sind, vorzugsweise in das Bodenteil (24).

9. Gasdruckfeder nach einem der vorhergehenden Ansprüche,
**dadurch gekennzeichnet, dass** die Mittel (90) zur Erzeugung elektrischer Energie aus der in der Gasdruckfeder (10") abgestrahlten Wärmeenergie ausgebildet sind.

10. Gasdruckfeder nach Anspruch 9,
**dadurch gekennzeichnet, dass** die Mittel (90) ein Peltier-Element (92) mit einer ersten Seite (94) und einer zweiten Seite (96) aufweisen, welches vorzugsweise in dem Gehäuse (20), insbesondere dem Bodenteil (24), derart angeordnet ist, dass die erste Seite (94) in wärmeleitendem Kontakt mit dem Gehäuse (20) und die zweite Seite (96) in wärmeleitendem Kontakt mit der Umgebung der Gasdruckfeder (10") ist.

## Claims

1. Gas compression spring (10, 10', 10'') with a cylindrical housing (20), which comprises a wall (22), a bottom part (24) and a cover part (26) having an opening (28) as well as a longitudinal axis (1), and with a piston (30) which has an outer surface (32) and an end face (34) and is displaceable in the housing (20) along the longitudinal axis (1), wherein a gas compression chamber (40) is formed between the piston (30) and the housing (20) and wherein the gas compression spring (10, 10', 10'') has at least one sensor (50) for detection of at least one physical variable, **characterised in that** the gas pressure spring (10, 10', 10") has means (70, 80, 90) for generating at least a part of the electrical power necessary for supplying current to the at least one sensor (50).

2. Gas pressure spring according to claim 1, **characterised in that** the means (70) for generating electrical power are formed from the relative movement between the piston (30) and the housing (20).

3. Gas pressure spring according to claim 2, **characterised in that** the means (70) have a coil (72) and a magnet (76).

4. Gas compression spring according to claim 3,
**characterised in that** the magnet (76) is arranged on the piston (30) and the coil is arranged on the housing (20), preferably inside the gas compression chamber (40).

5. Gas pressure spring according to claim 4, **characterised in that** the coil (72) has connection contacts (74), which extend in a pressure-tight manner out of the gas compression chamber (40), preferably into the bottom part (24).

6. Gas pressure spring according to one of the preceding claims, **characterised in that** the means (80) for generating electrical power are formed from the pressure change in the gas pressure spring (10) in particular in the gas compression chamber (40).

7. Gas compression spring according to claim 6,
**characterised in that** the means (80) have a piezoelectric element (82) which is preferably arranged on the outside of the bottom part (24) or in the gas compression chamber (40).

8. Gas pressure spring according to claim 7, **characterised in that** the piezoelectric element (82) is arranged in the gas compression chamber (40) and has connection contacts (84), which extend in a pressure-tight manner out of the gas compression chamber (40), preferably into the bottom part (24) .

9. Gas pressure spring according to according to one of the preceding claims, **characterised in that** the means (90) for generating electrical power are formed from the thermal energy emitted in the gas pressure spring (10").

10. Gas pressure spring according to claim 9, **characterised in that** the means (90) have a Peltier element (92) having a first side (94) and a second side (96), which is preferably arranged in the housing (20), in particular the bottom part (24), in such a way that the first side (94) is in heat-conducting contact with the housing (20) and the second side (96) is in heat-conducting contact with the surroundings of the gas pressure spring (10").

## Revendications

1. Vérin pneumatique (10, 10', 10") comprenant un carter cylindrique (20) qui comporte une paroi (22), une partie de fond (24) et une partie de couvercle (26) munie d'une ouverture (28) ainsi qu'un axe longitudinal (1), et un piston (30) susceptible de coulisser dans le carter (20) le long de l'axe longitudinal (1), et muni d'une surface externe (32) et d'une face frontale (34), une chambre de compression de gaz (40) étant formée entre le piston (30) et le carter (20), et le vérin pneumatique (10, 10', 10") comportant au moins un capteur (50) permettant de détecter au moins une grandeur physique,
**caractérisé en ce que**
le vérin pneumatique (10, 10', 10") comporte des moyens (70, 80, 90) permettant de produire au moins une partie de l'énergie électrique nécessaire pour l'alimentation du capteur (50) en courant.

2. Vérin pneumatique conforme à la revendication 1,
**caractérisé en ce que**
les moyens (70) permettant de produire de l'énergie électrique sont réalisés à partir du déplacement relatif entre le piston (30) et le carter (20).

3. Vérin pneumatique conforme à la revendication 2,
**caractérisé en ce que**
les moyens (70) comportent une bobine (72) et un aimant (76) .

4. Vérin pneumatique conforme à la revendication 3,
**caractérisé en ce que**
l'aimant (76) est monté sur le piston (30) et la bobine (72) est montée sur le carter (20), de préférence à la partie interne de la chambre de compression de gaz (40).

5. Vérin pneumatique conforme à la revendication 4,
**caractérisé en ce que**
la bobine (72) comporte des contacts de connexion (74) qui sortent de façon étanche aux gaz de la chambre de compression (40), de préférence dans la partie de fond (24).

6. Vérin hydraulique conforme à l'une des revendications précédentes,
**caractérisé en ce que**
les moyens (80) permettant de produire de l'énergie électrique sont réalisés à partir de la variation de pression dans le vérin hydraulique (10'), en particulier dans la chambre de compression de gaz (40).

7. Vérin pneumatique conforme à la revendication 6,
**caractérisé en ce que**
les moyens (80) comportent un élément piézoélectrique (82) qui est de préférence monté sur la face externe de la partie de fond (24) ou dans la chambre de compression de gaz (40) .

8. Vérin pneumatique conforme à la revendication 7,
**caractérisé en ce que**
l'élément piézoélectrique (82) est monté dans la chambre de compression de gaz (40) et comporte des contacts de connexion (84) qui sortent de façon étanche aux gaz de la chambre de compression de gaz (40), de préférence dans la partie de fond (24).

9. Vérin pneumatique conforme à l'une des revendications précédentes,
**caractérisé en ce que**
les moyens (90) permettant la production d'énergie électrique sont réalisés à partir de l'énergie thermique dissipée par le vérin hydraulique (10").

10. Vérin pneumatique conforme à la revendication 9,
**caractérisé en ce que**
les moyens (90) comportent un élément Peltier (92) ayant un premier côté (94) et un second côté (96), qui est de préférence monté dans le carter (20), en particulier dans la partie de fond (24) de sorte que le premier côté (94) soit en contact thermique avec le carter (20) et que le second côté (96) soit en contact thermique avec l'environnement du vérin hydraulique (10").
